# EUROPEAN PATENT APPLICATION

(11) **EP 4 365 208 A1**
(43) Date of publication of application: **08.05.2024**
(21) Application number: 22204851.4
(22) Date of filing: 01.11.2022
(51) Int. Cl.: C08F 2/01, B01J 3/04, C08F 10/00

(54) **HIGH-PRESSURE POLYMERIZATION PROCESS WITH CONTROLLED GAS VELOCITY**

(71) Applicant: Basell Polyolefine GmbH, 50389 Wesseling (DE)
(72) Inventor: KHAYRULLIN, Danir, 50321 Bruehl (DE); MOHRBUTTER, Juergen, 53347 Alfter (DE); WOLF, Christoph, 50259 Pulheim-Dansweiler (DE); FINETTE, Andre-Armand, 50997 Köln (DE); DEUERLING, Michael, 53919 Weilerswist (DE); WOLFRAM, Sven, 53881 Euskirchen (DE)
(74) Representative: LyondellBasell

(57) **Abstract**

A process for the polymerization or copolymerization of one or more ethylenically unsaturated monomers with a controlled gas velocity of the gaseous reaction as well as a high-pressure polymerization apparatus for carrying out the process of the present disclosure.

## Description

### FIELD OF THE DISCLOSURE

The present disclosure refers to a process for the polymerization or copolymerization of one or more ethylenically unsaturated monomers with a controlled gas velocity of the gaseous reaction as well as a high-pressure polymerization apparatus for carrying out the process of the present disclosure.

### BACKGROUND OF THE DISCLOSURE

Polymers play an essential and ubiquitous role in everyday life. One way to obtain polymers is by high-pressure polymerization which turns relatively low-cost olefin monomers such as ethylene, optionally in combination with one or more comonomers, into valuable polyolefin products. Polyethylene, being the most widely used commercial polymer, can be prepared by different processes, with polymerization in the presence of free-radical initiators at elevated pressures being the first method and continuing to be a valued process with high commercial relevance for the preparation of polyethylene.

A common set-up for preparing polyethylene comprises a polymerization reactor, which can be an autoclave or a tubular reactor or a combination of such reactors, and additional equipment. For pressurizing the reaction components, usually a set of two compressors, a primary compressor and a secondary, or hyper, compressor, is used. At the end of the polymerization sequence, a set-up for high-pressure polymerization normally further includes apparatuses like extruders and granulators for pelletizing the resulting polymer. Furthermore, such a set-up generally also comprises means for feeding monomers and comonomers, free-radical initiators, modifiers or other substances at one or more positions to the polymerization reaction.

WO 2017/003566 describes a high-pressure polyethylene polymerization system comprising a reactor, a primary compressor and a secondary compressor, the secondary compressor comprising: a) a first stage, wherein the first stage comprises at least two cylinders, and the discharge pipes of the at least two cylinders are fluidly connected by a first stage discharge cross-connect pipe; b) a second stage; c) and interstage; and d) a first cooler applied to the interstage piping at a location within 10 meters downstream of the first stage discharge cross-connect pipe.

WO 2017/194491 refers to process for the polymerization or copolymerization of one or more ethylenically unsaturated monomers in a continuously operated polymerization reactor wherein the polymerization is carried out in a production line in which the monomers are brought to the polymerization pressure by one or more compressors in a sequence of compression stages in which the compressed gas mixture is cooled after each compression stage by a compression stage cooler, the compressed monomers are optionally passed through a pre-heater or a pre-cooler and transferred into the polymerization reactor which is optionally cooled by cooling jackets, a reaction mixture obtained by the polymerization is leaving the reactor through a pressure control valve and optionally cooled by an post reactor cooler, the reaction mixture is separated into polymeric and gaseous components in two or more stages, where the gaseous components separated off in a first stage at an absolute pressure of from 15 MPa to 50 MPa are recycled to the one or more compressors via a high-pressure gas recycle line, and the gaseous components separated off in a second stage at an absolute pressure in the range of from 0.1 to 0.5 MPa are recycled to the first stage of the sequence of compression stages via a low-pressure gas recycle line, and the polymeric components obtained by the polymerization are transformed into pellets. Within the described process, the surroundings of the production line are monitored with respect to an occurrence of a leakage of monomers or of reaction mixture by an IR point detector arrangement of at least three groups of IR point detectors which are capable of detecting hydrocarbons and the groups of IR point detectors are operating according to a voting logic, and an emergency pressure release program is automatically started when a group of IR point detectors of the IR point detector arrangement detects the presence of hydrocarbons.

US 7,582,709 provides a process for the manufacture of ethylene polymers and copolymers comprising the steps of: compressing ethylene in a primary compressor at a throughput of at least 55 tonnes/hour and then mixing that ethylene with recycled ethylene and further compressing the ethylene to a pressure of at least 2300 bar at a throughput of at least 120 tonnes/hour in a secondary compressor, heating at least a portion of the compressed ethylene to a temperature of at least 95° C and introducing that heated ethylene into the front end of a tubular reactor having a maximum internal diameter of at least 65 mm and a length of at least 1500 m, introducing initiator into the tubular reactor in at least three separate locations, thereby defining at least three reaction zones, allowing the ethylene to polymerize, and cooling the reaction mixture in at least the first two reaction zones, such that at least 28% of the monomer is converted to polymer, maintaining a pressure drop over the length of the tubular reactor such as to maintain a flow velocity in the tubular reactor of at least 6 m/s, releasing the reaction mixture through a high-pressure, let-down valve, cooling the reaction mixture and separating the reaction mixture in a product separator into polymer and unreacted ethylene, and recycling unreacted ethylene.

The common processes suffer from the drawback that the secondary compressor, also referred as hyper compressor, causes a pulsation of the gaseous reaction mixture at the suction and discharge side of the hyper compressor cylinders, which in turn set the connected pipework containing the gaseous reaction mixture to vibrate. However, any pulsations and vibrations have a negative effect on plant performance. Increased gas pulsations reduce the lifetime of the cylinders of the compressors and strong vibrations require expensive measures to avoid damages in piping arrangements and support structures.

There is therefore a need for a high-pressure polymerization process which overcomes the drawbacks of the prior art and allows for compensation of the pulsation of the gaseous reaction mixture caused by the compressors.

### SUMMARY OF THE INVENTION

The present disclosure provides a process for polymerizing or copolymerizing one or more ethylenically unsaturated monomers at temperatures from 100 to 350 °C and pressures in the range from 110 to 500 MPa, wherein a gaseous reaction mixture is compressed in a hyper compressor comprising
- a first compressing stage comprising at least two cylinders being connected to a first stage discharge collection and distribution system via a first stage discharge pipe system;
- a second compressing stage comprising at least two cylinders being connected to a second stage suction collection and distribution system via a second stage suction pipe system and to a second stage discharge collection and distribution system via a second stage discharge pipe system;
- a heat exchanger arranged between the first and second compressing stage;

wherein the reaction mixture is provided to each compressing stage through a suction pipe system and the compressed reaction mixture is discharged from the compressing stage through a discharge pipe system;
wherein
   - the velocity of the gaseous reaction mixture in the first stage discharge pipe system is from 0.8 m/s to 2.5 m/s; and/or
   - the velocity of the gaseous reaction mixture in the first stage discharge collection and distribution system is from 2 m/s to 4 m/s; and/or
   - the velocity of the gaseous reaction mixture in the second stage discharge pipe system is from 0.8 m/s to 3.5 m/s; and/or
   - the velocity of the gaseous reaction mixture in the second stage discharge collection and distribution system is from 4 m/s to 9 m/s.

In some embodiments the gaseous reaction mixture is conveyed from the heat exchanger to a mixing block before entering the second stage suction collection and distribution system.

In some embodiments, the velocity of the gaseous reaction mixture in the first stage discharge pipe system is less than 1.7 m/s.

In some embodiments the velocity of the gas reaction mixture in first stage discharge collection and distribution system is less than 3.5 m/s.

In some embodiments the velocity of the gaseous reaction mixture in the second stage discharge pipe system is less than 2.5 m/s.

In some embodiments the velocity of the gaseous reaction mixture in the second stage discharge collection and distribution system is less than 7 m/s.

In some embodiments the first compressing stage is connected with a first stage suction collection and distribution system via a first stage suction pipe system and wherein the velocity of the gaseous reaction mixture in the first stage suction pipe system is preferably between 0.5 m/s and 3 m/s, in particular less than 1.5 and/or the velocity of the gaseous reaction mixture in the first stage suction collection and distribution system is between 3 m/s and 7 m/s, in particular less than 6 m/s.

In some embodiments, the velocity of the gaseous reaction mixture in the second stage suction pipe system is preferably from 0.5 m/s to 2.5 m/s, in particular less than 1.5 and/or the velocity of the gaseous reaction mixture in the second stage suction collection and distribution system is from 2 m/s to 3.5 m/s, in particular less than 3 m/s.

In some embodiments the gaseous reaction mixture is conveyed from the first stage discharge collection and distribution system through one or more mixing blocks before entering the heat exchanger.

In some embodiments the gaseous reaction mixture is conveyed from the second stage discharge collection and distribution system through one or more mixing block before being conveyed to a polymerization reactor.

In some embodiments the compressor system further comprises a pipe for providing the reaction mixture to the first stage suction collection and distribution system, wherein the gas velocity in said pipe is preferably from 3 to 7 m/s, preferably less than 6 m/s.

In some embodiments the compressor system further comprises a pipe for discharging the reaction mixture from the second stage collection and distribution system, wherein the gas velocity in said pipe is preferably from 10 to 16 m/s.

In some embodiments the reaction is compressed in a primary compressor before entering the hyper compressor.

The present disclosure further provides a high-pressure polymerization apparatus for polymerizing or copolymerizing one or more ethylenically unsaturated monomers, the apparatus comprising a hyper compressor for compressing a gaseous reaction mixture, the hyper compressor comprising
- a first compressing stage comprising at least two cylinders being connected to a first stage discharge gas collection and distribution system via a first stage discharge pipe system;
- a second compressing stage comprising at least two cylinders being connected to a second stage suction gas collection and distribution system via a second stage suction pipe system and to a second stage discharge gas collection and distribution system via a second stage discharge pipe system;
- a heat exchanger arranged between the first and second compressing stage.

### BRIEF DESCRIPTION OF THE DRAWINGS

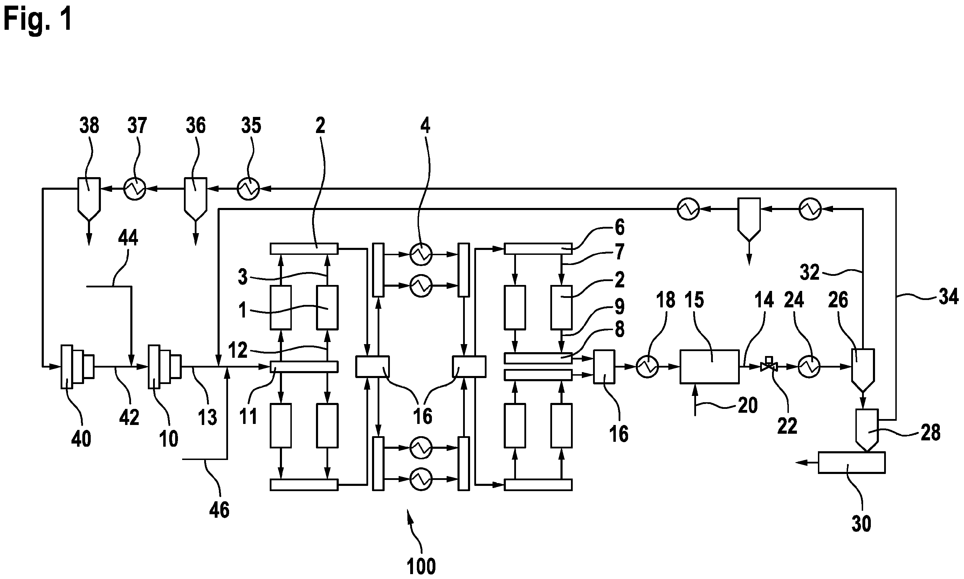

Figure 1 shows schematically a preferred embodiment of the present disclosure.

### DETAILED DESCRIPTION OF THE DISCLOSURE

The present disclosure relates to a process for high-pressure polymerization or copolymerization of one or more ethylenically unsaturated monomers. The high-pressure polymerization is carried out at pressures of from 110 MPa to 500 MPa, with pressures of from 160 MPa to 350 MPa being more preferred and pressures of from 200 MPa to 330 MPa being particularly preferred for polymerization in a tubular reactor and with pressures of from 110 MPa to 300 MPa being more preferred and pressures of from 120 MPa to 280 MPa being particularly preferred for polymerization in an autoclave reactor. The polymerization temperatures are in the range of from 100°C to 350°C and preferably in the range of from 180°C to 350°C and particularly preferred from 200°C to 330°C for polymerization in a tubular reactor and more preferably in the range of from 110°C to 320°C for polymerization in an autoclave reactor.

The polymerization is preferably a homopolymerization of ethylene or a copolymerization of ethylene with one or more other monomers, provided that these monomers are free-radically copolymerizable with ethylene under high pressure. Examples of copolymerizable monomers for use in the present technology are α,β-unsaturated C₃-C₈-carboxylic acids, derivatives of α,β-unsaturated C₃-C₈-carboxylic acids, e.g. unsaturated C₃-C₁₅-carboxylic esters or anhydrides, and 1-olefins. In addition, vinyl carboxylates, such as vinyl acetate, can be used as comonomers. Propene, 1-butene, 1-hexene, acrylic acid, n-butyl acrylate, tert-butyl acrylate, 2-ethylhexyl acrylate, vinyl acetate or vinyl propionate are particularly preferred as comonomer.

In the case of copolymerization, the proportion of comonomer or comonomers in the re action mixture is from 1 to 50% by weight, preferably from 3 to 40% by weight, based on the amounts of monomers, i.e. the sum of ethylene and other monomers.

For the purposes of the present disclosure, polymers or polymeric materials are substances which are made up of at least two monomer units. The polymers or polymeric materials are preferably low density polyethylenes having an average molecular weight Mₙ of more than 20 000 g/mole. The term "low density polyethylene" (LDPE) includes ethylene homopolymers and ethylene copolymers. The process can also be the preparation of oligomers, waxes and polymers having a molecular weight Mₙ of less than 20 000 g/mole. The polymerization is preferably a radical polymerization carried out in the presence of free-radical polymerization initiators. Possible initiators for starting the polymerization in the respective reaction zones are in general any substances that can produce radical species under the conditions in the polymerization reactor, for example, oxygen, air, azo compounds or peroxidic polymerization initiators. In an exemplary embodiment of the disclosure, the polymerization is carried out by using oxygen, either fed in the form of pure O₂ or as air. In case of initiating the polymerization with oxygen, the initiator is normally first mixed with the ethylene feed and then fed to the reactor. In such a case, it is not only possible to feed a stream comprising monomer and oxygen to the beginning of the polymerization reactor but also to one or more points along the reactor creating two or more reaction zones. Initiation using organic peroxides or azo compounds also represents a preferred embodiment of the present disclosure. It is possible to use either individual initiators or preferably mixtures of various initiators.

In the high-pressure polymerization, the molecular weight of the polymers to be prepared can be altered, for example by the addition of modifiers which act as chain-transfer agents. Examples of modifiers for use in the present technology are hydrogen, aliphatic and olefinic hydro carbons, e.g. propane, butane, pentane, hexane, cyclohexane, propene, 1-butene, 1-pentene or 1-hexene, ketones such as acetone, methyl ethyl ketone (2-butanone), methyl isobutyl ketone, methyl isoamyl ketone, diethyl ketone or diamyl ketone, aldehydes such as formaldehyde, acetaldehyde or propionaldehyde and saturated aliphatic alcohols such as methanol, ethanol, propanol, isopropanol or butanol. Particular preference is given to using saturated aliphatic aldehydes, in particular propionaldehyde or 1-olefins such as propene, 1-butene or 1-hexene, or aliphatic hydrocarbons such as propane.

Within the process of the present disclosure, a gaseous reaction mixture comprising the monomer feed is compressed in a hyper compressor which comprises a first compressing stage comprising at least two cylinders being connected to a first stage discharge collection and distribution system via a first stage discharge pipe system; a second compressing stage comprising at least two cylinders being connected to a second stage suction collection and distribution system via a second stage suction pipe system and to a second stage discharge collection and distribution system via a second stage discharge pipe system; and at least one heat exchanger arranged between the first and second compressing stage. The gaseous reaction is provided to each compressing stage through a suction pipe system and the compressed reaction mixture is discharged from the compressing stage through a discharge pipe system.

In a preferred embodiment, the collection and distribution systems are selected from the group consisting of cross-connect pipe, cross-connect block and high-pressure manifold.

According to the process of the present disclosure, the gaseous gas mixture is introduced into the first compressing stage by way of a first stage suction pipe system and discharged from the first compression stage via a first stage discharge system to a first stage discharge collection and distribution system. The gaseous reaction mixture is conveyed to at least one heat exchanger before entering the second stage compressing system via a second stage suction collection and distribution system and by way of a second stage suction pipe system is introduced into the second compressing stage. The gaseous reaction mixture leaves the second compressing stage via a second stage discharge pipe to a second stage discharge collection and distribution system.

Within the course of the present disclosure it was surprisingly found that by carefully controlling the velocity of the gaseous reaction mixture as well collecting the gaseous reaction mixture discharged from the cylinders in a collection and distribution system led to a reduction in gas pulsation which in turn resulted in reduced vibration of the whole system. The process of the present disclosure such provides a steady flow of the gaseous reaction mixture with reduced pulsation while keeping sufficient heat transfer in the one or more heat exchangers.

According to the present disclosure, the gas velocity of the gaseous reaction mixture is thus controlled to be within the following ranges:
the velocity of the gaseous reaction mixture in the first stage discharge pipe system is from 0.8 m/s to 2.5 m/s; and/or
the velocity of the gaseous reaction mixture in the first stage discharge collection and distribution system is from 2 m/s to 4 m/s; and/or
the velocity of the gaseous reaction mixture in the second stage discharge pipe system is from 0.8 m/s to 3.5 m/s; and/or
the velocity of the gaseous reaction mixture in the second stage discharge collection and distribution system is from 4 m/s to 9 m/s.

It was found that gas velocities within the claimed ranges provided the best dampening effects without negatively effecting the process performance.

I n one embodiment of the present disclosure, the velocity of the gaseous reaction mixture in the first stage discharge pipe system is less than 1.7 m/s.

In one embodiment, the velocity of the gaseous reaction mixture in the first discharge collection and distribution system is less than 3.5 m/s.

The velocity of the gaseous reaction mixture in the second stage discharge pipe system is less than 2.5 m/s.

In an exemplary embodiment, the velocity of the gaseous reaction mixture in the second stage discharge collection and distribution system is less than 7 m/s.

In an exemplary embodiment, the gaseous reaction mixture is compressed in the first compression stage to a pressure of from about 30 MPa to about 120 MPa, and in the second stage, the gaseous reaction mixture is further compressed to from about 120 MPa to the final polymerization pressure.

In order to further improve the dampening effect of the process of the present disclosure, the gaseous reaction mixture may be passed through additional collection and distribution systems. In an exemplary embodiment, the first stage compressing stage is therefore connected with a first stage suction collection and distribution system the first stage suction pipe system. In that case, the velocity of the gaseous reaction in the first stage suction pipe system is preferably between 0.5 and 3 m/s, in particular less than 1.5. Further or alternative preference is given to an embodiment wherein the velocity of the gaseous reaction mixture in the first stage suction collection and distribution system is between 3 m/s and 7 m/s, in particular less than 6 m/s.

In an exemplary embodiment of the present disclosure, the second compressing stage is connected with a second stage suction collection and distribution system via a second stage suction pipe system. Here, the velocity of the gaseous reaction mixture in the second stage suction pipe system may range from 0.5 m/s to 2.5 m/s, it may in particular be less than 1.5. Further preferred or alternatively, the velocity of the gaseous reaction mixture in the second stage suction collection and distribution system is from 2 m/s to 3.5 m/s, in particular less than 3 m/s.

Within the course of the process of the present disclosure, the gaseous reaction mixture may be passed through a number of mixing blocks. It was surprisingly found that this further dampens any pulsation of the gaseous reaction mixture. In addition, any gaseous reaction mixtures discharged from the individual cylinders of the first and/or second compressing stages may be combined. Therefore, an embodiment is preferred, wherein the gaseous reaction mixture is conveyed from the first stage discharge collection and distribution system through at least one mixing block before entering the at least one heat exchanger. The gaseous reaction mixture may for example be conveyed at a gas velocity of 2 to 4 m/s, in particular less than 3.5 m/s from the first compressing stage to the at least one heat exchanger, especially preferred via one or more mixing blocks.

Also, when leaving the second compressing stage, an embodiment is preferred wherein the gaseous reaction mixture is conveyed from the second stage discharge collection and distribution system through at least one mixing block before being conveyed to a polymerization reactor. The gaseous reaction mixture is preferably conveyed at a gas velocity of 2 to 3.5 m/s, in particular less than 3 m/s from the second stage discharge collection and distribution system to the polymerization reactor, especially via one or more mixing blocks.

In an exemplary embodiment, the gaseous reaction mixture is conveyed from the heat exchanger to one or more mixing blocks before entering the second stage suction collection and distribution system. In an exemplary embodiment, the compressor system further comprises a pipe for providing the reaction mixture to the first stage suction collection and distribution system, the gas velocity in said pipe preferably being from 3 to 7 m/s.

In some embodiments, the compressor system further comprises a pipe for discharging the reaction mixture from the second stage collection and distribution system, the gas velocity in said pipe being preferably from 10 to 16 m/s.

In line with the established technology, in some embodiments, the gaseous reaction mixture is compressed in a primary compressor before entering the hyper compressor. The gaseous reaction mixture may be compressed in the primary compressor to a pressure of from 10 MPa to 50 MPa. The primary compressor may comprise five or six compression stages. In some embodiments, fresh feed of ethylenically unsaturated monomers, such as ethylene may be introduced, and the combined gases compressed. In that case, an embodiment is preferred wherein the primary compressor comprises two or three compressing stage before adding the fresh gas and two or three after adding the fresh gas.

In some embodiments, fresh monomer feed is introduced into the gaseous reaction mixture before it enters the hyper compressor.

In some embodiments of the present disclosure the entire reaction gas composition provided by the hyper compressor is fed via a pre-heater to the inlet of a polymerization reactor. In another embodiment of the present disclosure only a part of the reaction gas composition compressed by the hyper compressor is fed via the pre-heater to the inlet of the polymerization reactor and the remainder of the reaction gas composition compressed by the hyper compressor is fed as one or more side streams to the polymerization reactor downstream of the inlet of the polymerization reactor. In such a set-up preferably from 30 to 90% by weight, more preferably from 40 to 70% by weight of the reaction gas composition provided by the hyper compressor are fed to the inlet of the polymerization reactor and from 10 to 70% by weight, more preferably from 30 to 60% by weight of the reaction gas composition provided by the hyper compressor are fed as one or more side streams to the polymerization reactor downstream of the inlet of the tubular reactor.

In another aspect, the present disclosure provides a high-pressure polymerization apparatus for polymerizing or copolymerizing one or more ethylenically unsaturated monomers. The apparatus comprises a hyper compressor for compressing a gaseous reaction mixture, the hyper compressor comprising
a first compressing stage comprising at least two cylinders being connected to a first stage discharge gas collection and distribution system via a first stage discharge pipe system;
a second compressing stage comprising at least two cylinders being connected to a second stage suction gas collection and distribution system via a second stage suction pipe system and to a second stage discharge gas collection and distribution system via a second stage discharge pipe system;
at least one heat exchanger arranged between the first and second compressing stage.

The at least on heat exchanger employed in the apparatus of the present disclosure may be a double pipe heat exchanger.

After leaving the hyper compressor, the compressed gaseous reaction mixture enters a high-pressure polymerization reactor where the actual polymerization takes place. The polymerization can be carried out with all types of high-pressure reactors appropriate for high-pressure polymerization. High-pressure reactors for use in the present technology are, for example, tubular reactors or autoclave reactors. The polymerization may be carried out in one or more tubular reactors or one or more autoclave reactors or combinations of such reactors.

Common high-pressure autoclave reactors are stirred reactors and have a length-to- diameter ratio in a range from 2 to 30, preferably from 2 to 20. Such autoclave reactors have one or more reaction zones, preferably from 1 to 6 reaction zones and more preferably from 1 to 4 reaction zones. The number of reaction zones depends on the number of agitator baffles which separate individual mixed zones within the autoclave reactor. In cases in which the polymerization or the first polymerization is carried out in an autoclave reactor, in which the only polymerization reactor is an autoclave reactor or in which the first reactor of a reactor cascade is an autoclave reactor, the reaction mixture coming from the compressors may be first passed through a pre-cooler before entering the autoclave reactor.

Appropriate tubular reactors are basically long, thick-walled pipes, which are from about 0.5 km to 4 km, preferably from 1 km to 3 km and especially from 1 .5 km to 2.5 km long. The inner diameter of the pipes is usually in the range of from about 30 mm to 120 mm and preferably from 60 mm to 100 mm. Such tubular reactors have preferably a length-to-diameter ratio of greater than 1000, preferably from 10000 to 40000 and especially from 25000 to 35000. Preferably the tubular reactor is composed of tubes of a length from 5 m to 25 m, more preferably of a length from 10 m to 22 m, and especially of a length of from 15 m to 20 m.

Preferred tubular reactors have at least two reaction zones, preferably from 2 to 6 reaction zones and more preferably from 2 to 5 reaction zones. The number of reaction zones is given by the number of feeding points for the initiator. Preferably, the tubular reactor is equipped with cooling jackets for removing the heat of the reaction. More preferably, all reaction zones of the tubular reactor are cooled by cooling jackets.

In a preferred embodiment, the apparatus comprises a pre-heater upstream of a polymerization reactor for heating the reaction gas composition to a temperature capable of initiating the polymerization. The pre-heater is preferably composed of tubes of a length from 5 m to 25 m, more preferably of a length from 10 m to 22 m, and especially of a length of from 15 m to 20 m. The individual tubes of the pre-heater are preferably flanged together. The tubes can also be flanged to a bend, preferably to a 180° bend.

The apparatus for carrying out the polymerization of the present disclosure comprises, in a preferred embodiment, beside the polymerization reactor, two or more gas recycle lines for recycling unreacted monomers into the polymerization process. The reaction mixture obtained in the polymerization reactor is preferably transferred to a first separation vessel, also called high-pressure product separator, and separated into a gaseous fraction and a liquid fraction at an absolute pressure of from 15 MPa to 50 MPa. The gaseous fraction withdrawn from the first separation vessel is fed via a high-pressure gas recycle line to the suction side of the hyper compressor. In the high-pressure gas recycle line, the gas may be purified by several purification steps for removing undesired components such as entrained polymer or oligomers. The liquid fraction withdrawn from the first separation vessel may still comprise dissolved monomers such as ethylene and comonomers in an amount of 20 to 40% of weight. It may be transferred to a second separation vessel, also called low-pressure product separator, and further separated, at reduced pressure, usually at an absolute pressure in the range of from 0.1 to 0.5 MPa, in polymeric and gaseous components. The gaseous fraction withdrawn from the second separation vessel is fed via a so-called low-pressure gas recycle line to the primary compressor, preferably to the foremost of the stages. Also, the low-pressure gas recycle line may comprise several purification steps for purifying the gas from undesired components.

The pressure within the polymerization reactor may in one embodiment be controlled by a pressure control valve, which is arranged at the outlet of the polymerization reactor and through which the reaction mixture leaves the reactor. The pressure control valve can be any valve arrangement which is configured for reducing the pressure of the reaction mixture leaving the reactor to the pressure within the first separation vessel.

In some embodiments, the apparatus comprises a post reactor cooler downstream of the polymerization reactor for cooling the reaction mixture. The post reactor cooler can be arranged upstream of the pressure control valve or the post reactor cooler can be arranged downstream of the pressure control valve. The post reactor cooler may be arranged downstream of the pressure control valve. The post reactor cooler may be composed of tubes of a length from 5 m to 25 m, more preferably of a length from 10 m to 22 m, and especially of a length of from 15 m to 20 m. The individual tubes of the tubular reactor are preferably flanged together.

The present disclosure will be described in more detail with reference to Figure 1. However, the description is in no way to be understood as limiting the scope and spirit of the disclosure.

The gaseous reaction mixture comprising one or more ethylenically unsaturated monomers is introduced into a primary compressor 10 which is connected to a hyper compressor 100 comprising a first stage suction collection and distribution system 11 via pipe 13. From the first stage suction collection and distribution system 11, the gaseous reaction mixture is conveyed via first stage suction pipe system 12 to first compressing stage 1. The gaseous reaction mixture leaves the first compressing stage 1 via first stage discharge pipe system 3 to enter first discharge collection and distribution system 2 before entering heat exchanger 4 via one or more mixing blocks 16. After leaving heat exchanger 4, the gaseous reaction mixture is conveyed to second stage suction collection and distribution system 6 which is connected to second compressing stage 2 via second stage suction pipe system 7. On its way, the gaseous mixture passes through one or mixing blocks 16. The compressed gaseous reaction mixture leaves the second compressing stage 2 by way of second stage discharge pipe 9 to enter the second stage discharge collection and distribution system 8 before being conveyed to the polymerization reactor 15 by way of second stage discharge pipe system 14 while passing through one or mixing blocks 16 arranged between the second stage discharge collection and distribution system 8 and the polymerization reactor 15. A preheater 18 may be arranged between the mixing block 16 and the polymerization reactor 15.

The reactor 15 may comprise initiator injection points for feeding initiator mixtures to the reactor 15. In Fig. 1 an initiator feed is schematically shown with arrow 20. However, the tubular reactor 15 may comprise multiple spatially separated initiator injection points.

The reaction mixture may leave the tubular reactor 15 through pressure control valve 22 and passes a post reactor cooler 24. Thereafter, the resulting polymer is separated off from unreacted ethylene and other low molecular weight compounds (monomers, oligomers, polymers, additives, solvent, etc.) by means of a first separation vessel 26 and a second separation vessel 28, discharged and pelletized via an extruder and granulator 30.

The ethylene and comonomers which have been separated off in the first separation vessel 26 are fed back to the inlet end of the tube reactor 15 in the high-pressure circuit 32. In the high-pressure circuit 32, the gaseous material separated from the reaction mixture is first freed from other constituents in at least one purification stage and then added to the monomer stream between primary compressor 10 and hyper compressor 100. The high-pressure circuit 32 may separate the solvent from waxes.

The ethylene which has been separated off in the second separation vessel 28, which further comprises, inter alia, the major part of the very low molecular weight products of the polymerization (oligomers) and solvent, is worked up in the low-pressure circuit 34 comprising a plurality of separators with a heat exchanger being arranged between each of the separators. Fig. 1 shows two purification stages consisting of heat exchangers 35 and 37 and separators 36 and 38. It is however also possible to use only one purification stage or preferably more than two purification stages. The low-pressure circuit 34 usually separates oils, solvent and waxes. The worked up ethylene is first compressed in a booster compressor 40 and returned to the primary compressor 10 via line 42. Chain transfer agents (CTA) may be added to the primary compressor together with the fresh ethylene via line 44. Comonomer may be added upstream of the hyper compressor 100 via line 46

## Claims

1. Process for polymerizing or copolymerizing one or more ethylenically unsaturated monomers at temperatures from 100 to 350 °C and pressures in the range from 110 to 500 MPa, wherein a gaseous reaction mixture is compressed in a hyper compressor (100) comprising
- a first compressing stage (1) comprising at least two cylinders being connected to a first stage discharge collection and distribution system (2) via a first stage discharge pipe system (3);
- a second compressing stage (5) comprising at least two cylinders being connected to a second stage suction collection and distribution system (6) via a second stage suction pipe system (7) and to a second stage discharge collection and distribution system (8) via a second stage discharge pipe system (9);
- a heat exchanger (4) arranged between the first and second compressing stage (1, 2); wherein the reaction mixture is provided to each compressing stage through a suction pipe system and the compressed reaction mixture is discharged from the compressing stage through a discharge pipe system;
wherein
- the velocity of the gaseous reaction mixture in the first stage discharge pipe system (3) is from 0.8 m/s to 2.5 m/s; and/or
- the velocity of the gaseous reaction mixture in the first stage discharge collection and distribution system (2) is from 2 m/s to 4 m/s; and/or
- the velocity of the gaseous reaction mixture in the second stage discharge pipe system (9) is from 0.8 m/s to 3.5 m/s; and/or
- the velocity of the gaseous reaction mixture in the second stage discharge collection and distribution system (8) is from 4 m/s to 9 m/s.

2. The process of claim 1, wherein the collection and distribution systems are selected from the group consisting of cross-connect pipe, cross-connect block and high-pressure manifold.

3. The process of any of the forgoing claims, wherein the velocity of the gaseous reaction mixture in the first stage discharge pipe system (3) is less than 1.7 m/s.

4. The process of any of the forgoing claims, wherein the velocity of the gas reaction mixture in first stage discharge collection and distribution system (2) is less than 3.5 m/s.

5. The process of any of the forgoing claims, wherein the velocity of the gaseous reaction mixture in the second stage discharge pipe system (9) is less than 2.5 m/s.

6. The process of any of the forgoing claims, wherein the velocity of the gaseous reaction mixture in the second stage discharge collection and distribution system (8) is less than 7 m/s.

7. The process of any of the forgoing claims, wherein the first compressing stage (1) is connected with a first stage suction collection and distribution system (11) via a first stage suction pipe system (12) and wherein the velocity of the gaseous reaction mixture in the first stage suction pipe system (12) is preferably between 0.5 m/s and 3 m/s, in particular less than 1.5 and/or the velocity of the gaseous reaction mixture in the first stage suction collection and distribution system (11) is between 3 m/s and 7 m/s, in particular less than 6 m/s.

8. The process of any of the forgoing claims, wherein the velocity of the gaseous reaction mixture in the second stage suction pipe system (7) is preferably from 0.5 m/s to 2.5 m/s, in particular less than 1.5 and/or the velocity of the gaseous reaction mixture in the second stage suction collection and distribution system (6) is from 2 m/s to 3.5 m/s, in particular less than 3 m/s.

9. The process of any of the forgoing claims, wherein the gaseous reaction mixture is conveyed from the first stage discharge collection and distribution system (2) through one or more mixing block (16) before entering the heat exchanger (4).

10. The process of any of the forgoing claims, wherein the gaseous reaction mixture is conveyed from the second stage discharge collection and distribution system (8) through a mixing block before being conveyed to a polymerization reactor (15).

11. The process of any of the forgoing claims, wherein the gaseous reaction mixture is conveyed from the heat exchanger (4) to one or more mixing blocks (16) before entering the second stage suction collection and distribution system (6).

12. The process of any of the forgoing claims, wherein the compressor system further comprises a pipe (13) for providing the reaction mixture to the first stage suction collection and distribution system (11), wherein the gas velocity in said pipe is preferably from 3 to 7 m/s, preferably less than 6 m/s.

13. The process of any of the forgoing claims, wherein the compressor system further comprises a pipe (14) for discharging the reaction mixture from the second stage collection and distribution system (8), wherein the gas velocity in said pipe is preferably from 10 to 16 m/s.

14. The process of any of the forgoing claims, wherein the reaction is compressed in a primary compressor (10) before entering the hyper compressor.

15. A high-pressure polymerization apparatus for polymerizing or copolymerizing one or more ethylenically unsaturated monomers, the apparatus comprising a hyper compressor for compressing a gaseous reaction mixture, the hyper compressor comprising
- a first compressing stage (1) comprising at least two cylinders being connected to a first stage discharge collection and distribution system (2) via a first stage discharge pipe system (3);
- a second compressing stage (5) comprising at least two cylinders being connected to a second stage suction collection and distribution system (6) via a second stage suction pipe system (7) and to a second stage discharge collection and distribution system (8) via a second stage discharge pipe system (9);
- a heat exchanger (4) arranged between the first and second compressing stage (1, 2).
